# EUROPÄISCHE PATENTSCHRIFT

(11) **EP 1 184 755 B1**
(45) Veröffentlichungstag und Bekanntmachung des Hinweises auf die Patenterteilung: **19.03.2008**
(21) Anmeldenummer: 01119059.2
(22) Anmeldetag: 07.08.2001
(51) Int. Cl.: G05B 19/042

(54) **Betriebsverfahren für eine aus einer Kopfbaugruppe und mindestens einer Eingabebaugruppe bestehende Peripheriesteuereinheit**
Method for operating a peripheral unit comprising one main group and at least one input group
Méthode de fonctionnement d'une unité périphérique comprenant un groupe de tête et au moins un groupe d'entrée

(30) Priorität: 18.08.2000 DE 10040468
(43) Veröffentlichungstag der Anmeldung: 06.03.2002
(73) Patentinhaber: SIEMENS AKTIENGESELLSCHAFT, 80333 München (DE)
(72) Erfinder: Röhle, Holger, 09240 Kemtau (DE); Weissbach, Bernhard, Dr., 09669 Frankenberg (DE)

(56) Entgegenhaltungen:
- EP-A- 0 903 655
- WO-A-96/01979
- DE-A- 4 408 488
- US-A- 4 550 382
- US-A- 5 933 347

## Beschreibung

Die vorliegende Erfindung betrifft ein Betriebsverfahren für eine aus einer Kopfbaugruppe und mindestens einer Eingabebaugruppe bestehende Peripheriesteuereinheit, wobei von der Eingabebaugruppe Prozessdaten in die Eingabebaugruppe eingelesen und danach an die Kopfbaugruppe bereitgestellt werden, wobei die Kopfbaugruppe den bereitgestellten Prozessdaten einen Zeitstempel zuordnet.

Peripheriesteuereinheit, die aus einer Kopfbaugruppe und - meist mehreren - Ein- und Ausgabebaugruppen bestehen, sind z.B. bei PROFIBUS-Systemen bekannt. Sie bilden dort einen so genannten DP-Slave.

Im Stand der Technik arbeiten die einzelnen Baugruppen der Peripheriesteuereinheit asynchron. Insbesondere bearbeiten die Eingabebaugruppen ihren gesamten Zyklus inklusive aller Diagnosen und Weiterverarbeitungen zu Ende und stellen erst dann ihre Prozessdaten für die Kopfbaugruppe bereit. Diese liest dann an der entsprechenden Stelle ihres eigenen Bearbeitungszyklus die Prozessdaten in die Kopfbaugruppe ein, überprüft sie auf Signaländerungen und speichert sie im Änderungsfall mit der zum Zeitpunkt des Einlesens in die Kopfbaugruppe gültigen Uhrzeit ab.

Diese Vorgehensweise kann zu Abweichungen zwischen der abgespeicherten Zeit und der Zeit, zu der die Prozessdaten in die Eingabebaugruppe eingelesen wurden, von mehreren Millisekunden führen.

Es ist zwar denkbar, die Eingabebaugruppen mit eigenen Zeitgebern zu versehen und beim Einlesen der Prozessdaten diesen sofort einen Zeitstempel zuzuordnen. In diesem Fall müssten aber nicht nur auf den Eingabebaugruppen Uhrenbausteine vorgesehen werden, sondern darüber hinaus auch diese untereinander und mit dem Uhrenbaustein der Kopfbaugruppe synchronisiert werden. Dies führt zu vergleichsweise hohen Kosten und belastet darüber hinaus die übrige Kommunikation zwischen den einzelnen Baugruppen.

In der EP 0 903 655, zum Beispiel, ist ein Verfahren um genaue Zeitstempel zu eingelesenen Prozessdaten zuzuordnen, das Eingabebaugruppen mit eigenen Zeitgebern verwendet, um beim Einlesen der Prozessdaten diesen einen Zeitstempel zuzuordnen.

Die Aufgabe der vorliegenden Erfindung besteht darin, ein kostengünstiges und effektives Betriebsverfahren für eine aus einer Kopfbaugruppe und mindestens einer Eingabebaugruppe bestehende Peripheriesteuereinheit zu schaffen, mittels dessen eine genaue Zeitstempelzuordnung zu den eingelesenen Prozessdaten möglich ist.

Die Aufgabe wird dadurch gelöst, dass von der Eingabebaugruppe zeitnah zum Einlesen der Prozessdaten ein Meldesignal an die Kopfbaugruppe übermittelt wird und dass die Kopfbaugruppe den Zeitstempel aufgrund des Empfangs des Meldesignals ermittelt.

Wenn das Übermitteln des Meldesignals hochprior und das Bereitstellen der Prozessdaten niederprior erfolgt, ist gewährleistet, dass das Meldesignal stets zeitnah zum Einlesen der Prozessdaten an die Kopfbaugruppe übermittelt wird.

Wenn das Meldesignal der Kopfbaugruppe über eine eigene Meldesignalleitung übermittelt wird, kann das Übermitteln des Meldesignals auch während des Austauschs von Prozessdaten zwischen anderen Baugruppen der Peripheriesteuereinheit erfolgen.

Wenn die in die Eingabebaugruppe eingelesenen Prozessdaten von der Eingabebaugruppe vorverarbeitet werden und das Meldesignal nur dann an die Kopfbaugruppe übermittelt wird, wenn die Eingabebaugruppe aufgrund der Vorverarbeitung einen Aktualisierungsbedarf für die Prozessdaten erkennt, wird der Pro-zessdatenaustausch zwischen der Eingabebaugruppe und der Kopfbaugruppe so gering wie möglich gehalten. Die Vorverarbeitung der Prozessdaten umfasst vorzugsweise insbesondere auch eine Plausibilitätsprüfung der in die Eingabebaugruppe eingelesen Prozessdaten.

Die Peripheriesteuereinheit ist in der Regel in ein größeres Automatisierungssystem eingebunden. Die Kopfbaugruppe stellt die Prozessdaten daher in der Regel für eine ihr übergeordnete Zentraleinheit bereit.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein verteiltes Automatisierungssystem,
- FIG 2: eine Peripheriesteuereinheit,
- FIG 3: eine Kopfbaugruppe,
- FIG 4: eine Eingabebaugruppe und
- FIG 5 und 6: Ablaufdiagramme.

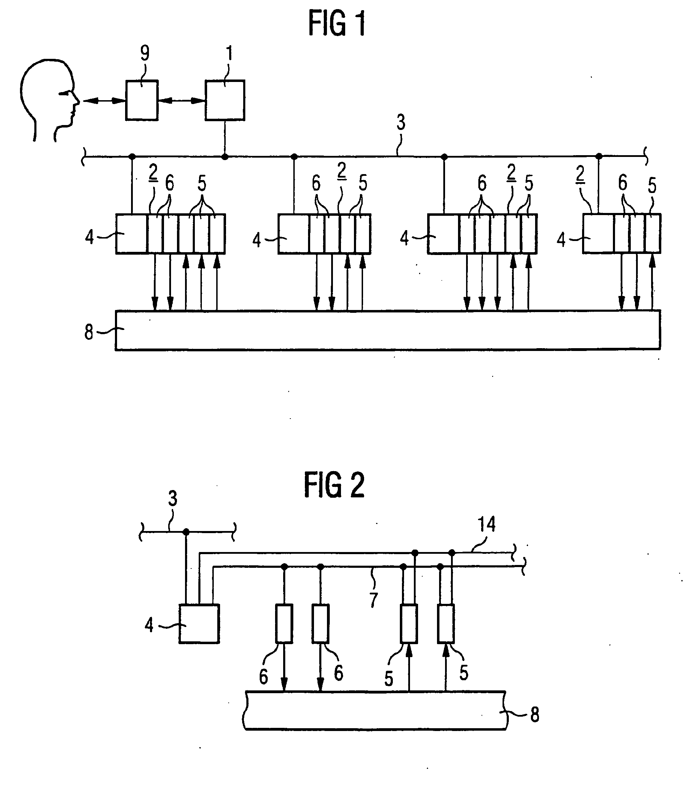

Gemäß FIG 1 besteht ein verteiltes Automatisierungssystem in der Regel aus einer übergeordneten Zentraleinheit 1 und mehreren Peripheriesteuereinheit 2. Die Zentraleinheit 1 und die Peripheriesteuereinheit 2 kommunizieren beispielsweise über einen seriellen Feldbus 3, z.B. gemäß dem PROFIBUS-Protokoll, miteinander.

Die Peripheriesteuereinheit 2 bestehen - siehe auch FIG 2 - jeweils aus einer Kopfbaugruppe 4, Eingabebaugruppen 5 und Ausgabebaugruppen 6. Die Baugruppen 4-6 jeder Peripheriesteuereinheit 2 sind über einen Steuereinheitsbus 7 miteinander verbunden. Der Steuereinheitsbus 7 kann wahlweise ein serieller oder ein paralleler Bus 7 sein.

Die Ein- und Ausgabebaugruppen 5, 6 lesen zyklisch Prozessdaten von einer zu steuernden technischen Anlage 8 ein bzw. geben Prozessdaten an diese aus. Sie stellen die eingelesenen Prozessdaten für die Kopfbaugruppen 4 bereit. Dort wird den Prozessdaten ein Zeitstempel zugeordnet und es erfolgt eine - zumindest teilweise - Weiterverarbeitung. Soweit erforderlich, werden die Prozessdaten von den Kopfbaugruppen 4 an die Zentraleinheit 1 weiterübermittelt. Die Zentraleinheit 1 kommuniziert in der Regel über eine geeignete Schnittstelle 9, z. B. einen Computermonitor mit einer Eingabetastatur und einer Maus, mit einem Anwender.

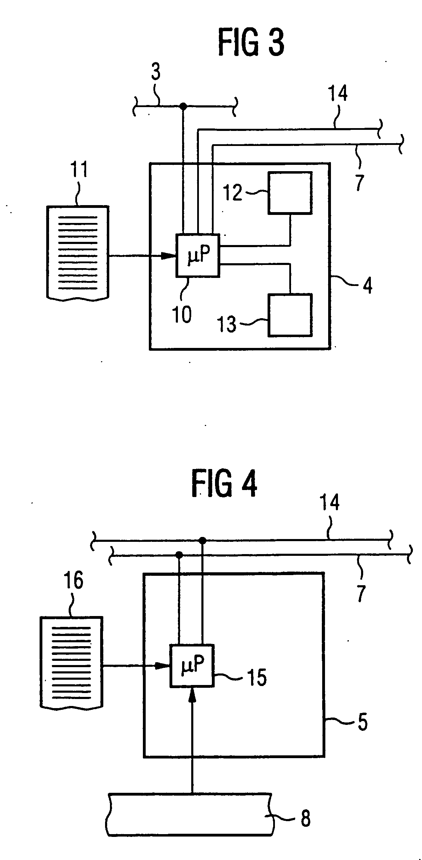

Gemäß FIG 3 weisen die Kopfbaugruppen 4 je einen Mikroprozessor 10 auf. Dieser arbeitet ein Computerprogrammprodukt 11 ab, welches den Betrieb der jeweiligen Kopfbaugruppe 4 steuert. Im Rahmen der Abarbeitung des Computerprogrammprodukts 11 kommuniziert die Kopfbaugruppe 4 unter anderem mit der Zentraleinheit 1 und den ihr zugeordneten Ein- und Ausgabebaugruppen 5, 6.

Die Kopfbaugruppe 4 weist ferner einen Zwischenspeicher 12 und einen Zeitgeber 13 auf. Der Zwischenspeicher 12 dient zum Zwischenspeichern von Prozessdaten sowie eines den Prozessdaten gegebenenfalls zugeordneten Zeitstempels. Der Zeitstempel wird durch Abfragen des Zeitgebers 13 ermittelt.

Ersichtlich ist der Mikroprozessor 10 einerseits mit dem seriellen Feldbus 3 und andererseits mit dem Steuereinheitsbus 7 verbunden. Der Steuereinheitsbus 7 weist dabei eine eigene Meldesignalleitung 14 auf, über die ein Meldesignal übermittelbar ist, auf das später noch näher eingegangen werden wird.

Gemäß FIG 4 weist jede Eingabebaugruppe 5 einen Mikrocontroller 15 auf. Der Mikrocontroller 15 arbeitet ebenfalls ein Computerprogrammprodukt 16 ab, das den Betrieb der Eingabebaugruppe 5 steuert.

Im Rahmen der Abarbeitung des Computerprogrammprodukts 16 liest der Mikrocontroller 15 gemäß einem Schritt 17 zunächst Prozessdaten von der zu steuernden technischen Anlage 8 in die jeweilige Eingabebaugruppe 5 ein. Danach nimmt der Mikrocontroller 15 in Schritten 18 und 19 eine Vorverarbeitung der in die Eingabebaugruppe 5 eingelesenen Prozessdaten vor. Insbesondere prüft der Mikrocontroller im Schritt 18, ob die Prozessdaten als solche möglich sind. Er nimmt also eine Plausibilitätsprüfung vor. Im Schritt 19 wird dann überprüft, ob sich die Prozessdaten gegenüber den beim vorherigen Zyklus eingelesenen Prozessdaten geändert haben. Nur wenn die Prozessdaten sowohl plausibel sind als auch eine Änderung erfolgt ist, werden nachfolgende Schritte 20, 21 durchlaufen. Das Übermitteln des Meldesignals an die Kopfbaugruppe 4 und das Bereitstellen der Prozessdaten für die Kopfbaugruppe 4 erfolgt also nur dann wenn die Eingabebaugruppe 5 aufgrund der Vorverarbeitung einen Aktualisierungsbedarf für die Daten erkennt. Der Schritt 20 könnte alternativ aber auch vor der Prüfung auf Plausibilität und/oder Änderungen erfolgen.

Im Schritt 20 wird unverzüglich, also zeitnah zum Einlesen der Prozessdaten in die Eingabebaugruppe 5 ein Meldesignal an die Kopfbaugruppe 4 übermittelt. Das Übermitteln des Meldesignals erfolgt hochprior über die Meldesignalleitung 14.

Nach dem Übermitteln des Meldesignals werden im Schritt 21 die eingelesenen Prozessdaten für die Kopfbaugruppe 4 bereitgestellt. Das Bereitstellen der Prozessdaten erfolgt niederprior an der Prozessdatenschnittstelle des restlichen Steuereinheitsbusses 7, also ohne Beachtung der Meldesignalleitung 14.

Das Abarbeiten der Schritte 17 bis 21 erfolgt in der Regel zyklisch. Nach der Abarbeitung des Schrittes 21 wird also wieder mit der Abarbeitung des Schrittes 17 begonnen.

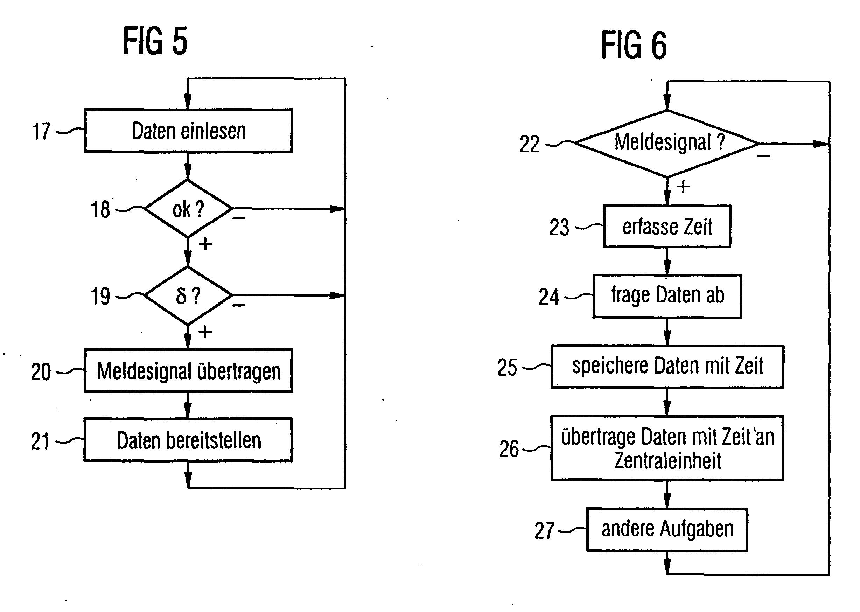

Die Kopfbaugruppe 4 arbeitet ihr Programm in der Regel zyklisch ab. Dieses umfasst gemäß FIG 6 insbesondere Schritte 22 bis 27.

Im Schritt 22 wird abgefragt, ob ein Meldesignal von einer der Eingabebaugruppen 5 übermittelt wurde. Wenn ja, wird im Schritt 23 durch Abfragen des Zeitgebers 13 die Zeit erfasst, also ein Zeitstempel ermittelt. Das Ermitteln des Zeitstempels erfolgt also unverzüglich nach dem Empfang des Meldesignals. Der ermittelte Zeitstempel wird im Zwischenspeicher 12 hinterlegt.

Sodann werden im Schritt 24 die korrespondierenden Prozessdaten von der signalisierenden Eingabebaugruppe 5 abgefragt. Die Prozessdaten werden ebenfalls im Zwischenspeicher 12 abgespeichert. Ihnen wird der zuvor ermittelte Zeitstempel zugeordnet. Soweit erforderlich, werden die eingelesenen Prozessdaten und der ihnen zugeordnete Zeitstempel im Schritt 26 für die übergeordnete Zentraleinheit 1 bereitgestellt. Ferner werden im Schritt 27 weitere Aufgaben ausgeführt, die im Rahmen der vorliegenden Erfindung nicht von Belang sind. Danach wird wieder mit dem Schritt 22 fortgefahren.

Mittels des erfindungsgemäßen Betriebsverfahrens ist ohne zusätzlichen Hardwareaufwand gegenüber dem Stand der Technik und mit nur sehr geringem zusätzlichem Softwareaufwand gegenüber dem Stand der Technik eine erhebliche Steigerung bei der Genauigkeit des Zeitstempels erreichbar. Insbesondere ist die Genauigkeit des Zeitstempels nunmehr unabhängig von der Verzögerung zwischen dem Einlesen der Prozessdaten und dem Bereitstellen der Prozessdaten und auch unabhängig von der U-bertragungsdauer.

## Patentansprüche

1. Betriebsverfahren für eine aus einer Kopfbaugruppe (4) und mindestens einer Eingabebaugruppe (5) bestehende Peripheriesteuereinheit (2), wobei von der Eingabebaugruppe (5) Prozessdaten in die Eingabebaugruppe (5) eingelesen und danach für die Kopfbaugruppe (4) bereitgestellt werden, wobei die Kopfbaugruppe (4) den bereitgestellten Prozessdaten einen Zeitstempel zuordnet,
**dadurch gekennzeichnet,**
**dass** von der Eingabebaugruppe (5) zeitnah zum Einlesen der Prozessdaten ein Meldesignal an die Kopfbaugruppe (4) übermittelt wird und dass die Kopfbaugruppe (4) den Zeitstempel aufgrund des Empfangs des Meldesignals ermittelt.

2. Betriebsverfahren nach Anspruch 1,
**dadurch gekennzeichnet,**
**dass** das Übermitteln des Meldesignals hochprior und das Bereitstellen der Prozessdaten niederprior erfolgt.

3. Betriebsverfahren nach Anspruch 1 oder 2,
**dadurch gekennzeichnet,**
**dass** das Meldesignal der Kopfbaugruppe über eine eigene Meldesignalleitung (14) übermittelt wird.

4. Betriebsverfahren nach Anspruch 1, 2 oder 3,
**dadurch gekennzeichnet,**
**dass** die in die Eingabebaugruppe (5) eingelesenen Prozessdaten von der Eingabebaugruppe (5) vorverarbeitet werden und **dass** das Meldesignal nur dann an die Kopfbaugruppe (4) übermittelt wird, wenn die Eingabebaugruppe (5) aufgrund der Vorverarbeitung einen Aktualisierungsbedarf für die Prozessdaten erkennt.

5. Betriebsverfahren nach Anspruch 4,
**dadurch gekennzeichnet,**
**dass** die Vorverarbeitung der Prozessdaten eine Plausibilitätsprüfung der in die Eingabebaugruppe (5) eingelesenen Prozessdaten umfasst.

6. Betriebsverfahren nach einem der obigen Ansprüche,
**dadurch gekennzeichnet,**
**dass** die für die Kopfbaugruppe (4) bereitgestellten Prozessdaten von der Kopfbaugruppe (4) für eine der Kopfbaugruppe (4) übergeordnete Zentraleinheit (1) bereitgestellt werden.

7. Computerprogrammprodukt für eine Kopfbaugruppe (4) zur Durchführung eines Betriebsverfahrens nach einem der Ansprüche 1 bis 6.

8. Kopfbaugruppe zur Durchführung eines Betriebsverfahrens nach einem der Ansprüche 1 bis 6.

9. Kopfbaugruppe nach Anspruch 8,
**dadurch gekennzeichnet,**
**dass** sie mit einem Computerprogrammprodukt (11) nach Anspruch 7 programmiert ist.

10. Computerprogrammprodukt für eine Eingabebaugruppe (5) zur Durchführung eines Betriebsverfahrens nach einem der Ansprüche 1 bis 6.

11. Eingabebaugruppe zur Durchführung eines Betriebsverfahrens nach einem der obigen Ansprüche 1 bis 6.

12. Eingabebaugruppe nach Anspruch 11,
**dadurch gekennzeichnet,**
**dass** sie mit einem Computerprogrammprodukt (16) nach Anspruch 10 programmiert ist.

## Claims

1. Operating method for a peripheral control unit (2) consisting of a header module (4) and at least one input module (5), with process data being read into the input module (5) by the input module (5) then made available to the header module (4), with the header module (4) assigning a time stamp to the process data made available,
**characterised in that**
a status signal is conveyed to the header module (4) by the input module (5) near the time the process data is read in and **in that** the header module (4) determines the time stamp based on the status signal's reception.

2. Operating method according to claim 1
**characterised in that**
the status signal is conveyed with high priority and the process data is made available with low priority.

3. Operating method according to claim 1 or 2
**characterised in that**
the status signal is conveyed to the header module over a separate status-signal lead (14).

4. Operating method according to claim 1, 2, or 3
**characterised in that**
the process data read into the input module (5) is preprocessed by the input module (5) and **in that** the status signal is not conveyed to the header module (4) until the input module (5) has detected an updating requirement for the process data based on the preprocessing.

5. Operating method according to claim 4
**characterised in that**
preprocessing of the process data includes a plausibility check on the process data read into the input module (5).

6. Operating method according to one of the above claims
**characterised in that**
the process data made available to the header module (4) is made available by the header module (4) to a central unit (1) superordinate to the header module (4).

7. Computer-program product for a header module (4) for implementing an operating method according to one of claims 1 to 6.

8. Header module for implementing an operating method according to one of claims 1 to 6.

9. Header module according to claim 8
**characterised in that**
it is programmed with a computer-program product (11) according to claim 7.

10. Computer-program product for an input module (5) for implementing an operating method according to one of claims 1 to 6.

11. Input module for implementing an operating method according to one of above claims 1 to 6.

12. Input module according to claim 11
**characterised in that**
it is programmed with a computer-program product (16) according to claim 10.

## Revendications

1. Procédé pour faire fonctionner une unité de commande périphérique (2) constituée d'un module de tête (4) et d'au moins un module d'entrée (5), des données de processus par le module (5) d'entrée étant entrées dans le module d'entrée (5) puis délivrées au module de tête (4), le module de tête (4) associant une date automatique aux données de processus délivrées,
**caractérisé en ce qu'**un signal d'avertissement est transmis au module de tête (4) par le module d'entrée (5) lorsque celui-ci est près d'entrer les données de processus et **en ce que** le module de tête (4) détecte la date automatique à la suite de la réception du signal d'avertissement.

2. Procédé de fonctionnement selon la revendication 1, **caractérisé en ce que** la transmission du signal d'avertissement se fait avec une priorité élevée et la délivrance des données de processus se fait avec une priorité plus faible.

3. Procédé de fonctionnement selon la revendication 1 ou 2, **caractérisé en ce que** le signal d'avertissement est transmis au module de tête sur une ligne propre au signal d'avertissement (14).

4. Procédé de fonctionnement selon la revendication 1, 2 ou 3, **caractérisé en ce que** les données de processus, entrées dans le module d'entrée (5), sont prétraitées par le module d'entrée (5) et **en ce que** le signal d'avertissement n'est transmis qu'ensuite au module de tête (4), lorsque le module d'entrée (5) détecte un besoin d'actualisation des données de processus à la suite du prétraitement.

5. Procédé de fonctionnement selon la revendication 4, **caractérisé en ce que** le prétraitement des données de processus comporte un test de vraisemblance des données de processus entrées dans le module d'entrée (5).

6. Procédé de fonctionnement selon 1"une des revendications précédentes, **caractérisé en ce que** les données de processus délivrées au module de tête (4) sont délivrées par le module de tête (4) à une unité centrale (1) disposée à un niveau supérieur à celui du module de tête (4).

7. Programme informatique permettant à un module de tête (4) de mettre en oeuvre un procédé selon l'une des revendications 1 à 6.

8. Module de tête destiné à mettre en oeuvre un procédé selon l'une des revendications 1 à 6.

9. Module de tête selon la revendication 8, **caractérisé en ce qu'**il est programmé avec un programme informatique (11) selon la revendication 7.

10. Programme informatique permettant à un module d'entrée (5) de mettre en oeuvre un procédé selon l'une des revendications 1 à 6.

11. Module d'entrée destiné à mettre en oeuvre un procédé selon l'une des revendications précédentes 1 à 6.

12. Module d'entrée selon la revendication 11, **caractérisé en ce qu'**il est programmé avec un programme informatique (16) selon la revendication 10.
